# EUROPEAN PATENT SPECIFICATION

(11) **EP 0 390 172 B1**
(45) Date of publication and mention of the grant of the patent: **14.09.1994**
(21) Application number: 90106074.9
(22) Date of filing: 29.03.1990
(51) Int. Cl.: G03B 27/80

(54) **Exposure control method for photographic printer**
Belichtungssteuerungsmethode eines fotografischen Kopiergeräts
Méthode de contrôle d'exposition d'une imprimante photographique

(30) Priority: 29.03.1989 JP 77887/89; 11.09.1989 JP 235397/89; 05.03.1990 JP 53458/90
(43) Date of publication of application: 03.10.1990
(73) Proprietor: FUJI PHOTO FILM CO., LTD., Kanagawa-ken (JP)
(72) Inventor: Suzuki, Kenji, c/o Fuji Photo Film Co.,Ltd., Ashigarakami-gun, Kanagawa (JP); Nakamura, Hiroaki, c/o Fuji Photo Film Co.,Ltd., Ashigarakami-gun, Kanagawa (JP)
(74) Representative: Grünecker, Kinkeldey, Stockmair & Schwanhäusser Anwaltssozietät

(56) References cited:
- DE-A- 3 642 821
- US-A- 4 159 174
- US-A- 4 344 708
- US-A- 4 707 118
- US-A- 4 736 244
- PATENT ABSTRACTS OF JAPAN vol. 10, no. 319 (E-450) 30 October 1986 ; & JP-A-61 129 997

## Description

### Background of the Invention

The present invention relates to an exposure control method for use with a photographic printer, and more particularly to an exposure control method capable of determining at high precision the setting positions of color correction filters for the adjustment of color or density.

For a photographic printer of the light adjustment type where three color components of a printing light are adjusted, there are disposed cyan, magenta and yellow color correction filters between a light source and a negative film. The printing light, of whose three color components the ratio and intensity have been adjusted by these color correction filters, is mixed and applied to an image frame (negative image) set at a printing stage. This image frame is then projected upon a color paper while the shutter is open.

With a conventional open-type photometry and light adjustment method, the three color correction filters are set at predetermined positions, and each color of an image frame to be printed is measured with a corresponding light receiving device. The measured density (strictly speaking, a logarithmic value of light amount) of each color and, if necessary, manually inputted correction data are used to calculate the logarithmic values of exposure light amount for red, green and blue colors. The relationship between the setting positions of the color correction filters each represented by the number of drive pulses from a pulse motor and the logarithmic values of light amount is previously stored in a memory as a calibration curve for each color. By referring to the calibration curve, the setting position of each color correction filter can be obtained from the logarithmic value of exposure light amount. The color correction filters are then set at the determined setting positions by driving the pulse motor.

A calibration curve obtained by setting the three color correction filters at the same filter setting position differs from a calibration curve obtained by sequentially and separately using the three color correction filters. The reason for this is that if the three color correction filters are inserted in the printing optical path at the same time, unwanted absorption occurs in the color correction filters. The calibration curve used with the conventional open-type photometry and light adjustment method is formed by using the three color correction filters at the same time. Therefore, although a proper color adjustment can be obtained for an image frame having a proper color balance that allows setting the three color correction filters at the same position, yet a proper exposure control cannot be obtained for most of the actual image frames to be printed since they have unbalanced color.

The above problems can be solved by the feedback control. Specifically, by using as a target value the logarithmic value of calculated exposure light amount for each color, and as an actual measured light value the logarithmic value of light amount measured by inserting each color correction filter into the printing optical path, the position of the color correction filter may be adjusted so as to make the actual measured light value coincident with the target value. This feedback control, however, requires a DC servo motor in a drive unit of the color correction filter. A brush-less DC servo motor is expensive, whereas a brush type DC servo motor has a problem of durability.

In addition to the photometry error caused by unwanted absorption by association of color correction filters, there is another photometry error which depends upon a photometry precision of light receiving devices for measuring an image frame to be printed. For instance, a blue color light receiving device for measuring a blue color has sensitivity not only for essential blue color but also for red color although the sensitivity for the latter is relatively small. Therefore, it is difficult to correctly measure the blue color component transmitted through an image frame. The sensitivity for a color other than an essential color is called "sensitivity crosstalk" hereinafter.

A method to improve the purity of a hard copy is known from JP-A-61-129997 wherein, a signal of the three primary colours R, G and B is supplied from a signal source to a logarithmic convertion circuit whereby the signal is converted into density signals of colours cyan, magenta and yellow. These density signals are then supplied to a matrix calculation circuit and converted into mask correction signals for these colours. Further, a detecting circuit is employed to detect the negative part generated to the signal of the colour magenta upon which the volume of the colour cyan is decided.

A further method for exposure control is disclosed in US-A-4,707,118 describing colour compensation filters to control and change the amount of light in the three primary colours for printing. The density of the film to be printed is photographically measured. The measured values for the colours red, green and blue are subjected to a matrix calculation to obtain corrected values for these colours. The correction table containing the elements of the multiplying matrix are prepared by obtaining values in advance either by computation or experiments using the spectral characteristics of the photographic paper which is to be used for printing, then measuring the actual amount of light with photosensors, and then comparing both values. The corresponding values for the corrected colours are then realised by changing the amount of the colour compensation filters inserted into the optical light path between the light source and the frame to be printed.

### Objects of the Invention

It is therefore a principal object of the present invention to provide an exposure control method for a photographic printer capable of high precision exposure control by reducing unwanted absorption by color correction filters without performing a feedback control which leads to a problem of cost and durability.

It is another object of the present invention to provide an exposure control method for a photographic printer capable of high precision exposure control by reducing an amount of photometry error caused by sensitivity crosstalk of a light receiving device.

It is a further object of the present invention to provide an exposure control method for a photographic printer capable of readily determining the setting position of a color correction filter while eliminating unwanted absorption of color correction filters and sensitivity crosstalk of a light receiving device.

### Summary of the Invention

The foregoing objects are solved according to the invention by an exposure control method according to claim 1. According to such a method the measured densities of three primary colors obtained by measuring an image frame to be printed are subjected to matrix calculation to determine the filter setting position for one color while considering the measured densities of all the three colors.

Representing the filter setting positions as FP_{c}, FP_{M} and FPy (where C is for cyan, M is for magenta, and Y is for yellow), the following equation for example is used in the matrix calculation: 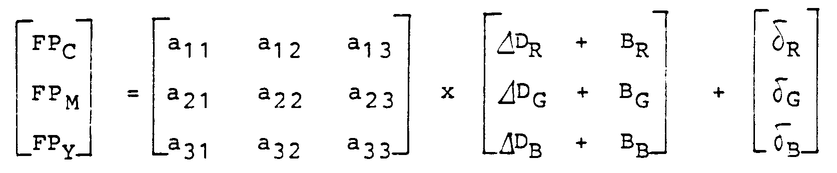 The symbols used in the matrix have the following meanings.
Δ_{DR}, ΔD_{G} and ΔD_{B}:
   R is for red, G is for green, and B is for blue.
   Representing the measured normal density for a normal control negative film as DN_{;} (i represents one of red, green and blue colors), the measured density of an image frame to be printed as D_{;}, and the density difference (DNᵢ - D_{;}) as Δdᵢ, then they represent a virtual measured density difference which is a subtraction of a virtual density Dᵢ, obtained by converting the density (DNᵢ + Δdᵢ) into the linear area, from a virtual measured normal density DNᵢ obtained by converting the measured normal density DNᵢ into the linear area.
a₁₁ to a₃₃:
   They are elements (coefficients) of the matrix. The coefficients for a color (object color) to be calculated, usually take a value of 1 to 1.5, and the coefficients for the other two colors used for the calculation usually take a value of ± 1 x 10-⁴ to ± 2 x 10-¹.
B_{R}, B_{G} and B_{B}:
   They are the virtual measured densities corresponding to the filter setting positions for a properly finished normal control negative film.
6_{R}, 6_{G} and δ_{B}:
   They are elements (correction constants) of the matrix and preferably take a value of 0 to ± 2 x 10⁻¹.

According to another preferred embodiment, the measured light values (light quantities) for three primary colors obtained by measuring an image frame to be printed are subjected to the below matrix calculation, to thereby cancel the sensitivity crosstalk of a light receiving device. The measured light values after subjected to this matrix calculation are logarithmically converted into the measured densities. The measured light values after the correction are substituted into the first-mentioned matrix equation to thereby cancel the filter unwanted absorption and thereafter calculate the filter setting positions. 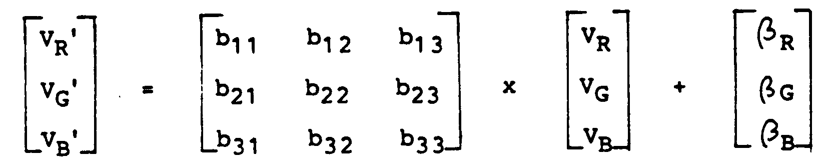 The symbols in the matrix have the following meanings.
V_{R}, V_{G} and V_{B}:
   They are the measured light values of three primary colors.
V_{R}', V_{G}' and V_{B} :
   They are the measured light values after the matrix calculation.
b11 to b₃₃, βR, β_{G} and β_{B}:
   They are elements of the matrix for cancelling the sensitivity crosstalk of light receiving devices, and preferably take a value 1 for an object color, and a value of ± 1 x 10-⁴ to ± 2 x 10-¹ for the two other colors. The correction constants take a value of 0 to ± 2 x 10-¹.

According to another preferred embodiment, the results of the matrix calculation are used as table data which are stored in a look-up table. In determining the filter setting positions, using the measured light values or density values, the filter setting positions of three colors are directly searched from the look-up table.

In the present invention, the measured density is converted into the virtual measured density in the linear area so as to obtain a linear relationship between the filter setting position and the measured density (measured gain value). The converted virtual measured densities are corrected by using the 3 x 3 matrix calculation. With the matrix calculation using the virtual measured densities, an exposure control having substantially the same precision as the feedback control can be performed even for an image frame having unbalanced color which requires the three color correction filters to be set at different positions. Accordingly, the high precision exposure control not obtained by a conventional open-type photometry and light adjustment method can be realized without using the feedback control system. The present invention also solves the problem of cost and durability caused by a use of a feedback control system using a servo motor.

Further, the measured light values are subjected to a matrix calculation in order to cancel the photometry error caused by sensitivity crosstalk of light receiving devices. The calculated values are logarithmically converted into the measured densities which are further converted into the virtual measured densities and subjected to the matrix calculation. Therefore, the sensitivity crosstalk of light receiving devices and the color filter unwanted absorption are cancelled to thereby reduce the photometry error and provide a higher precision exposure control.

Furthermore, by storing the matrix calculation results in a look-up table as its table data, it is possible to quickly determine the filter setting position.

### Brief Description of the Drawings

The above and other objects and advantages of the present invention will become apparent from the following detailed description of the invention when read in connection with the accompanying drawings in which:
Fig.1 is a schematic diagram partially in block form of an example of a photographic printer practicing the present invention;
Fig.2 is a graph illustrating how the filter setting position is calculated;
Fig.3 is a block diagram illustrating the function of matrix calculation of signals from light receiving devices;
Fig.4 is a graph showing an example of the spectral sensitivity of light receiving devices;
Fig.5 is a graph showing an example of the spectral transmittance of color correction filters;
Fig.6 is a graph showing an example of the intensity distribution of an incident light;
Fig.7 is a schematic diagram showing an image area sensor; and
Fig.8 is a block diagram showing an embodiment using a look-up table memory.

### Detailed Description of the Invention

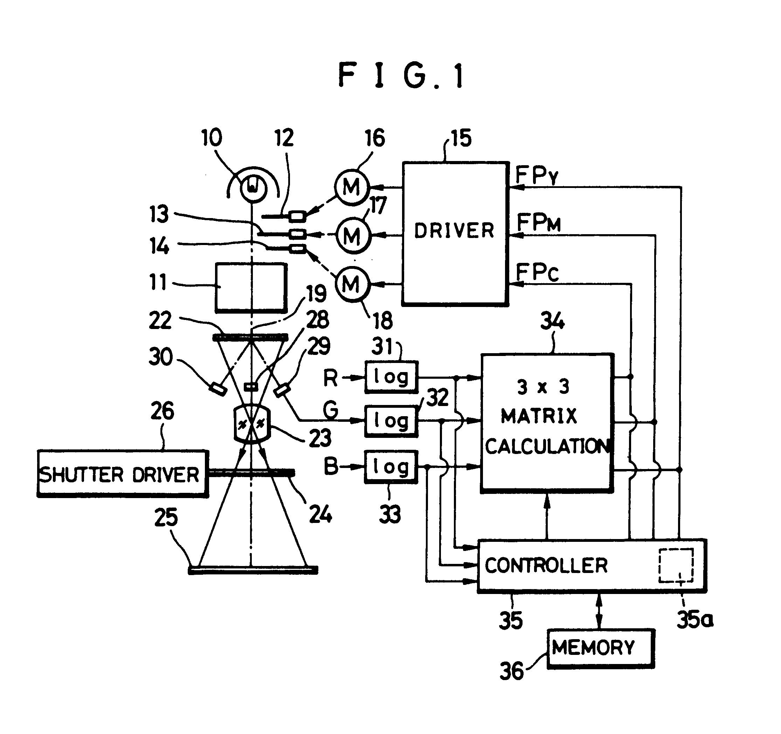

Referring to Fig.1, between a light source 10 for radiating white light and a mirror tunnel 11, there are disposed yellow filter 12, magenta filter 13 and cyan filter 14. These color correction filters 12 to 14 are driven by pulse motors 16 to 18 connected to a driver 15 such that the amount of insertion of the filters into a printing optical path 19 is controlled.

The printing light sufficiently mixed at the mirror tunnel 11 illuminates a negative film 22 from the back side thereof. The printing light transmitted through the negative film 22 is applied via a printing lens 23 to a color paper 25 while a shutter 24 is open, to thereby expose and print the image frame. Reference numeral 26 represents a shutter drive unit for opening and closing the shutter 24, which is constructed of a solenoid or motor.

The average transmittance density, e.g., LATD, of an image frame is measured for each color by a red color light receiving device 28, green color light receiving device 29, and blue color light receiving device 30. These light receiving devices 28 to 30 each are constructed of a color filter and a light receiving element. The light within the wavelength range selected by the color filter is photoelectrically converted into an electric signal. The signals outputted from the light receiving devices 28 to 30 are logarithmically converted at logarithmic converters 31 to 33 into measured densities (strictly speaking, logarithmic values of light quantities) which are then sent to a matrix calculation circuit 34.

The matrix calculation circuit 34 executes the following equation (1) for each image frame, and the obtained filter setting position is sent to the driver 15 so as to adjust the corresponding filter setting position FPⱼ (where j is one of C for cyan, M for magenta, and Y for yellow). 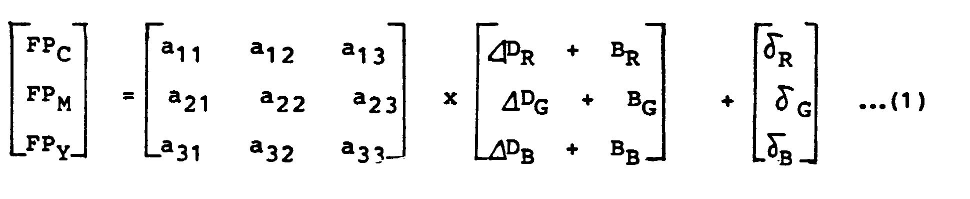 The symbols used in the matrix have the following meanings. ΔD_{R}, AD_{G} and ΔD_{B}:

R is for red, G is for green, and B is for blue. Representing the measured density for a normal control negative film as DN_{;} (i represents one of red, green and blue colors), the measured density of an image frame to be printed as D_{;}, and the density difference (DNᵢ - Dᵢ) as Δdᵢ, then they represent a virtual measured density difference which is a subtraction of a virtual density Dᵢ, obtained by converting the density (DNᵢ + Δdᵢ) into the linear area, from a virtual measured density (DNᵢ obtained by converting the measured density DNᵢ into the linear area.
a₁₁ to a₃₃:
   They are elements (coefficients) of the matrix obtained through the regression analysis.
B_{R}, B_{G} and B_{B}:
   They are the virtual measured densities corresponding to the filter setting positions for a properly finished normal control negative film.
6_{R}, 6_{G} and δ_{B}:
   They are elements (correction constants) of the matrix obtained through the regression analysis.

In setting the elements of the matrix, a controller 35 fetches the measured density signals outputted from the logarithmic converters 31 to 33 while changing the setting positions of the color correction filters 12 to 14. A calibration curve is formed based on the measured density signals and the filter setting positions. An arithmetic operation unit 35a determines a₁₁ to a₃₃ and 6_{R}, δ_{G} and 6_{B} by using the regression analysis process. A memory 36 stores therein programs for the regression analysis, exposure light amount calculation equation and the like, and other necessary data. In the regression analysis, as is shown in the below Table, an image frame is measured while using various setting positions of the color correction filters 12 to 14, and a straight line which makes minimum the average of absolute values of calculated difference values obtained by using respective measured light values and the matrix, i.e., which makes minimum the average distance. Instead of the regression analysis, a fuzzy computer having neural networks may be used to determine the elements of the matrix.

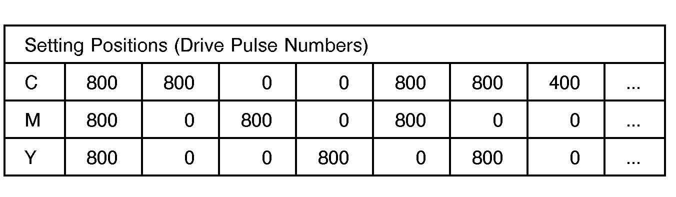

The matrix elements determined as above take a value of 1 to 1.5 for a color (object color) to be calculated in determining the filter setting position, a value of ± 1 x 10-⁴ to ± 2 x 10⁻¹ for the other two colors, and a value of 0 to ± 2 x 10⁻¹ for the correction constants 6_{R}, δ_{G} and δ_{B}. A preferable example thereof is shown below.

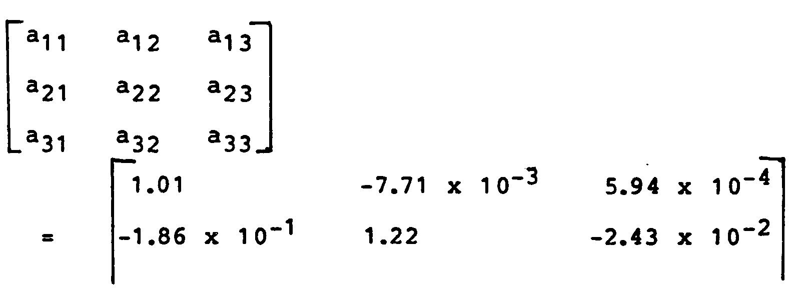

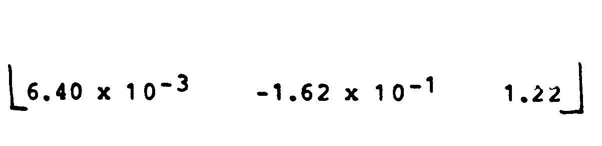

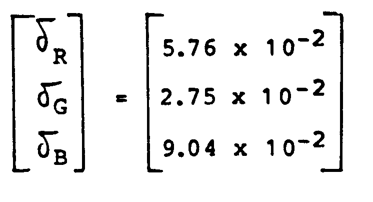

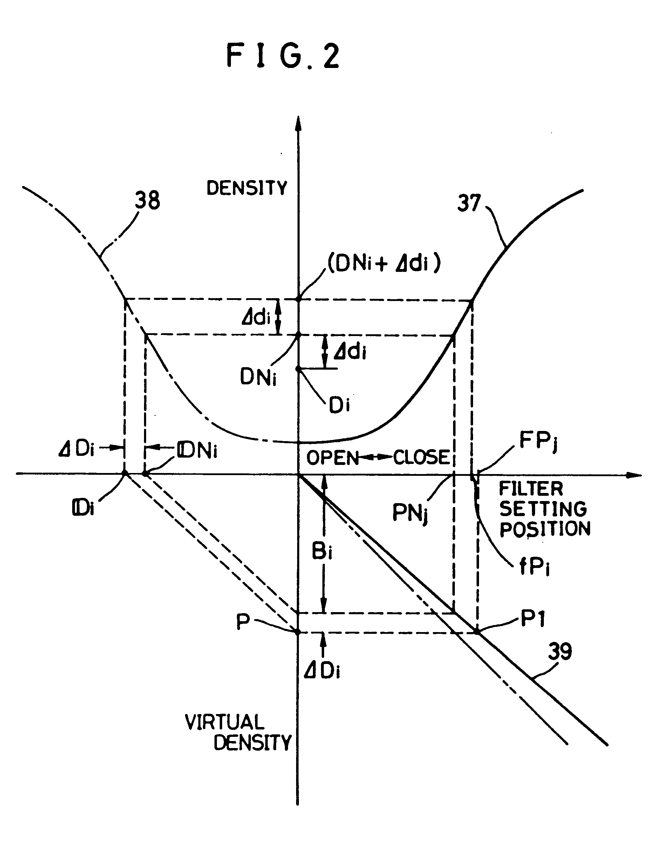

Fig.2 is a graph illustrating how a filter setting position is calculated. A curve 37 is a calibration curve showing the relationship between the filter setting position and the measured density (measured gain value) when the three color correction filters are inserted into the printing optical path 19 at the same time. Namely, the three color correction filters are set at the same position, and one of the three colors transmitted through the normal control negative film is measured and plotted in the graph. DN_{;} represents a measured density of the normal control negative film when the three color correction filters 12 to 14 are set at the light measuring position, D_{;} represents the measured density of an image frame to be printed when the three color correction filters 12 to 14 are set at the light measuring position, and Δdᵢ represents a difference therebetween.

A curve 38 is a curve symmetrical to the calibration curve 37 relative to the vertical axis (Y axis). The measured density difference Δdᵢ on the curve 38 is projected to the horizontal axis (X axis) to obtain the virtual measured density difference ΔDᵢ converted into the linear area. Namely the virtual measured density difference DDᵢ is a subtraction of the virtual measured density Dᵢ, obtained by linearly converting the density (DNᵢ + Δdᵢ), from the virtual measured density DNᵢ obtained by linearly converting the measured density DNᵢ of the normal control negative film.

With the balance value Bᵢ, the point P at the virtual measured density (ΔDᵢ + Bᵢ) is obtained. The equation (1) is used in obtaining the X coordinate value of a point P1 where a line parallel to the X axis and passing the point P intersects with a straight line 39. The X coordinate value of the point P1 is FPⱼ. The straight line having a slope of 45 degrees shown by a two-dot-chain line represents a unit matrix for the matrix of the equation (1).

Reference symbol fPⱼ represents a filter setting position when the three color correction filters are set at the same position. An image frame having a proper color balance is set at this position fPⱼ. An image frame having unbalanced color is set at the filter setting position FPⱼ to attain a high precision exposure control. PNⱼ represents the filter setting position for the normal control negative film.

Next, the operation of the above-described embodiment will be described in brief. In determining the elements of the matrix, the controller 35 causes the light receiving devices 28 to 30 to measure the three color components of the printing light transmitted through the normal control negative film while inserting the three color correction filters 12 to 14 by the same length in the printing optical path 19. The output signals from the light receiving devices 28 to 30 are converted into the measured densities at the logarithmic converters 31 to 33 and sent to the controller 35. The controller 35 then forms a filter calibration curve as shown in Fig.2 for each color which indicates the relationship between the filter setting position and the measured density. The obtained three calibration curves are written in the memory 36. After forming the calibration curves, the normal control negative films are measured while changing the positions of the three color correction filters. The filter setting positions and measured densities are written in the memory 36. After this measurement, a number of measured data are used in determining the elements of the matrix, by using the regression analysis or neural networks in the arithmetic operation unit 35a. The measured density when the three color correction filters 12 to 14 are set at the light measuring position is sent to the controller 35 as the measured density DN_{;} of the normal control negative film. Next, the measured density DN_{;} on the calibration curve is projected to the X axis to obtain a linearly converted virtual measured density DNᵢ which is then stored in the memory 36. Next, the normal control negative film is printed for a test while changing the balance value B so as to determine the balance value B suitable for obtaining the same quality as that of the reference print.

After determining the elements of the matrix including the balance value B_{;}, an actual image frame is printed. In this case, a negative film is set at the printing stage, and the color correction filters 12 to 14 are set at predetermined light measuring positions. The printing light radiated from the light source 10 is transmitted through respective areas of the color correction filters 12 to 14, enters the mirror tunnel 11 to be diffused sufficiently, and illuminates the negative film 22. A part of the printing light transmitted through the image frame of the negative film 22 is measured by the light receiving devices 28 to 30.

The measured densities D_{;} of the image frame of the negative film 22 are sent to the 3 x 3 matrix calculation circuit 34 to thereby calculate the density (DN_{;} + Δdᵢ) by using the measured density DN_{;} of the normal control negative film. The density (DNᵢ + Δdᵢ) is converted into the linear virtual measured density Dᵢ. The virtual measured density difference on the other hand can be obtained through subtraction of the virtual measured density Dᵢ from the previously measured virtual density DNᵢ of the normal control negative film. Next, the virtual measured density difference ΔDᵢ, balance value B and δᵢ are substituted into the matrix equation (1) to calculate the filter setting position FPⱼ. This filter setting position FPⱼ is then sent to the driver 15 to drive the pulse motors 16 to 18 and insert the color correction filters 12 to 14 into the printing optical path 19. After setting the color correction filters 12 to 14, the shutter 24 is open for a predetermined time to expose and print the image frame of the negative film 22 onto a color paper 25. If a manual exposure correction amount is entered from a keyboard in a well-known manner, the entered manual correction amount for each color is added to the matrix calculation equation (1).

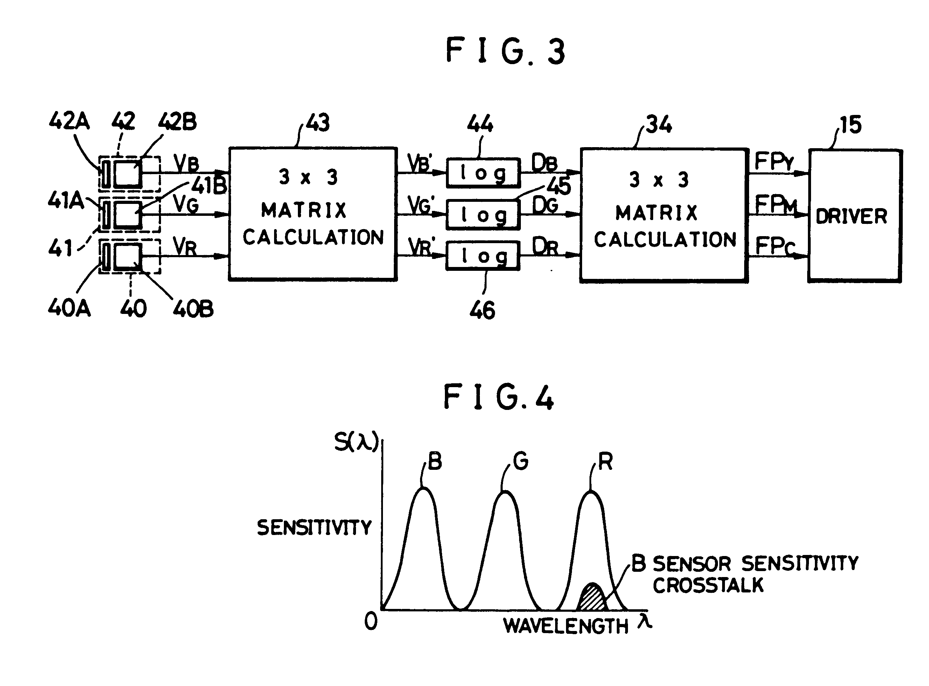

Next, another embodiment for cancelling the sensitivity crosstalk of a light receiving device will be described for the case where a light receiving device for measuring an image frame to be printed has a sensitivity crosstalk, e.g., for the case where a blue color light receiving device has a sensitivity also for a red color. In this embodiment, as is shown in Fig.3, prior to logarithmically converting three color measured values V_{R}, V_{G} and V_{B} from the red, green and blue light receiving devices 40, 41 and 42 into the measured densities, the calculation by the below equation (2) is executed at the 3 x 3 matrix calculation unit 43 to thereby cancel the sensitivity crosstalk of the light receiving devices 40 to 42. The light receiving devices 40 to 42 are constructed of color filters 40A, 41 A and 42A and light receiving elements 40B, 41 B and 42B so that the light within the wavelength range selected by the color filters are photoelectrically converted into electric signals.

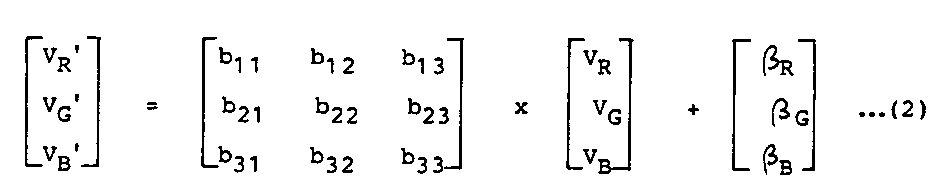

wherein b₁₁ to b₃₃, and β_{R}, β_{G} and β_{B} are elements of the matrix for cancelling the sensitivity crosstalk of the light receiving devices. These elements can be obtained using the regression analysis or neural networks on the basis of the simulation results of the light receiving device outputs relative to the incident lights using the spectral sensitivity data of the light receiving devices and the spectral transmission data of the color filters. The coefficients of the matrix take a value 1 for an object color, and a value of ± 1 x 10-⁴ to ± 2 x 10⁻¹ for the other two colors. The correction constants β_{R}, β_{G} and β_{B} take a value of 0 to ± 2 x 10⁻¹. A preferred example thereof is shown below.

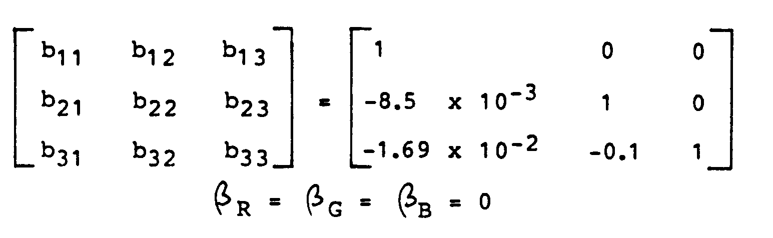

The light amount signal V_{i'} after matrix calculation is logarithmically converted at the logarithmic converters 44, 45 and 46 into the measured density D_{;}. This measured density Dᵢ is subjected to the matrix calculation by the equation (1) at the matrix calculation unit 34 in the similar manner as the first embodiment, to thereby calculate the filter setting position FPⱼ. It is noted that the measured density for obtaining the matrix elements a₁₁ to a₃₃, and 6_{R}, δ_{G} and 6_{B} of the equation (1) through the regression analysis are the same measured densities after the calculation by the equation (2) for cancelling the sensitivity crosstalk of light receiving elements. Next, the position of each color correction filter is adjusted by the driver 15 in accordance with the obtained FPⱼ.As described above, prior to performing the logarithmic conversion of the measured light value Vᵢ, it is subjected to the matrix conversion for cancelling the sensitivity crosstalk of light receiving devices, and thereafter, the results are logarithmically converted. The obtained measured density Dᵢ is used in calculating the filter setting position in the similar manner to the first embodiment. Accordingly, it is possible to reduce both the photometry error caused by the sensitivity crosstalk of the light receiving devices 40 to 42 and the photometry error caused by unwanted absorption of the color correction filters.

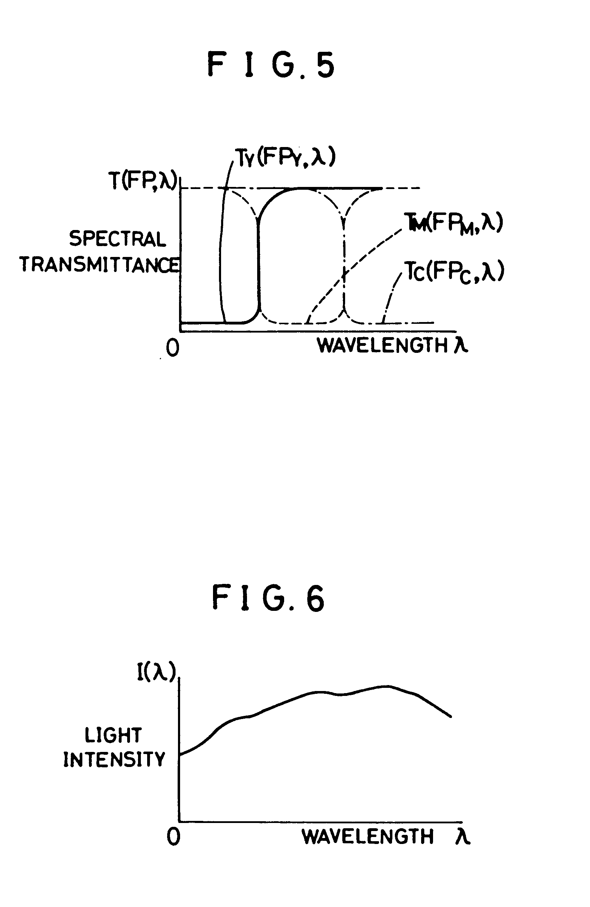

Next, the principle of reducing the photometry error caused by the sensitivity crosstalk of light receiving devices will be described. As is shown in Fig.4, for example, of the light receiving devices for the three color separation and photometry for an image frame to be printed, the blue color light receiving device (B sensor) has a sensitivity also for a red color. The output V_{B} of the blue color light receiving device affected by the cyan filter is therefore given by: 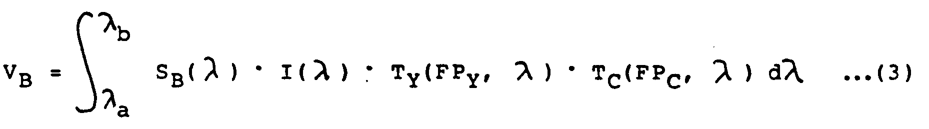 where FP is a filter setting position, λ is a wavelength, S(X) is a spectral sensitivity of the light receiving device (refer to Fig.4), T(FP, x) is an effective spectral transmittance at the filter setting position (refer to Fig.5), and I(x) is the intensity distribution of an incident light without a filter (refer to Fig.6).

It is assumed that the color correction filter has a rectangular frequency characteristic, i.e., sharp cut-off characteristic with small ripple, and that the attenuation of an incident light in the filter base is zero. Then, the output V_{B} given by the equation (3) is written as:

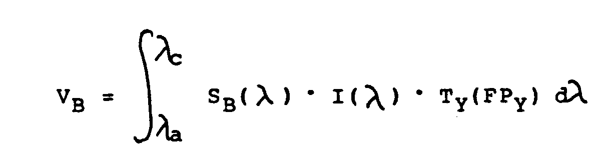

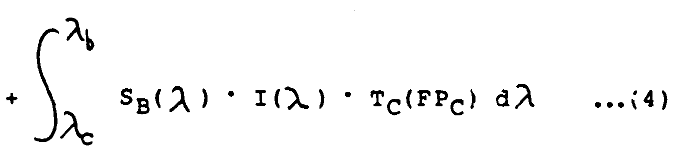

Expressing the integration portions of the equation (4) as V_{B}1 and V_{B}2, respectively, the following equation (5) is obtained:

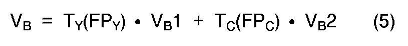

By logarithmically converting V_{B} into the measured density (gain value) D_{B}, the following equation (6) is given:

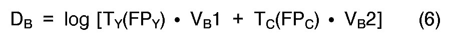

The following fact will be understood from the above equation: The output V of a light receiving device is a sum of an object color and another color having a sensitivity crosstalk. In other words, the smaller the gain of an object color, the larger the effect of the sensitivity crosstalk. It is noted that the equation (6) has no conformity with the following, in thich light receiving device outputs are added after the logarithmic conversion:

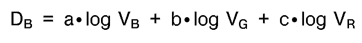

The photometry error caused by the sensitivity crosstalk of a light receiving device accordingly cannot be expected to reduce if the light amount after logarithmic conversion is subjected to the 3 x 3 matrix calculation. Consequently, the output value from the light receiving device prior to logarithmic conversion is subjected to the 3 x 3 matrix calculation, to effectively suppress the influence by the sensitivity crosstalk.

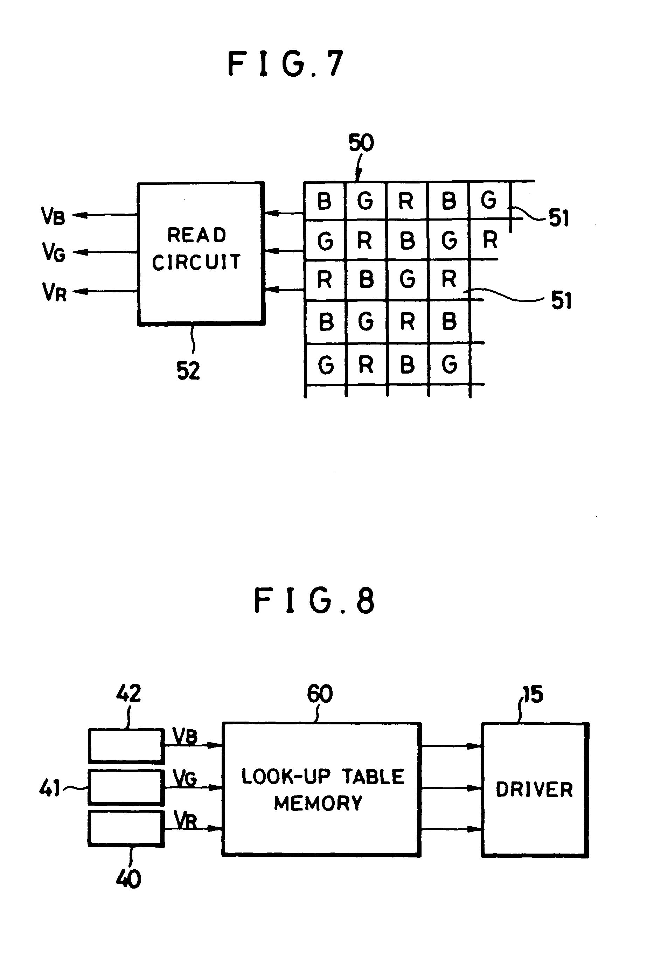

In the above embodiments, three color light receiving devices have been used for the photometry of an image frame to be printed. In place of the three light receiving devices, an image area sensor 50 as shown in Fig.7 may be used. Filters for transmitting red, blue or green colors are mounted on respective pixels 51 of the image sensor 50. In Fig.7, R, B and G represent red, blue and green pixels. Signals from the image area sensor 50 are read by a read circuit 52 for each of three colors, and inputted to the matrix calculation unit 43 to cancel the sensitivity crosstalk.

In the embodiment shown in Fig.3, the measured light values V_{R}, V_{G} and V_{B} of the light receiving devices 40 to 42 are converted into the filter setting positions FP_{c}, FP_{M} and FPy by using the matrix calculation circuit 43, logarithmic converters 44 to 46 and matrix calculation circuit 34. Such arrangement requires a long calculation time. It is therefore convenient to use a look-up table as shown in Fig.8. In this embodiment, a series of calculations for each measured light amount are previously executed to obtain table data representative of the relationship between the measured light amount and corresponding filter setting position, and the table data are stored in a look-up table memory 60. With this arrangement, the filter setting position can be directly obtained from the measured light amount. It is apparent that in the embodiment shown in Fig.1, the calculation results by the matrix calculation circuit 34 and the calculation results by the logarithmic converters 31 to 33 and matrix calculation circuit 34 are written in the look-up table 60.

## Claims

1. An exposure control method for a photographic printer which has yellow, magenta and cyan colour correction filters between a light source and a negative film, comprising the steps of controlling the insertion of each colour correction filter into the printing optical path of said printer to adjust simultaneously the three colour components of a printing light with which an image frame of the negative film is printed on a colour paper;
measuring the intensity of the light transmitted through said image frame to be printed to obtain a measured light amount of each of the three primary colours;
logarithmically converting said measured light amount to obtain a measured density of each of the three primary colours;
subjecting said measured densities to a matrix calculation for obtaining the setting positions of said colour correction filters, by considering all three values of the measured densities of said three primary colours,
characterised in that
said matrix calculation is executed by using the following equation: 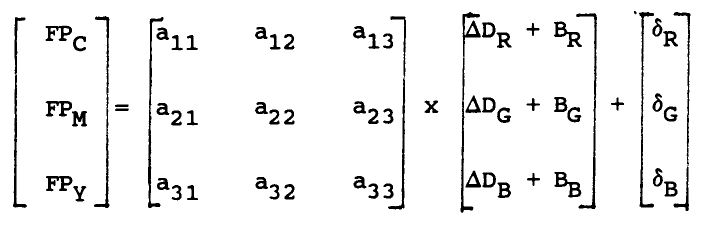 wherein the symbols in said equation have meanings such that:
FP_{c}, FP_{M} and FPy:
represent said filter setting positions (where C is for cyan, M is for magenta, and Y is for yellow),
ΔD_{R}, ΔD_{G} and ΔD_{B}:
each represent a virtual measured density difference which is a subtraction of a virtual density Dᵢ, obtained by converting a density difference DNᵢ + Δdᵢ into the linear area, from a virtual normal density DNᵢ, obtained by converting a measured normal density DN_{;} into the linear area, where the measured normal density for a normal control negative film represented by DN_{;}, with i representing one of red, reen and blue colours, the measured density of said image frame to be printed is represented by Dᵢ, and the density difference DNᵢ - Dᵢ is represented by Δdᵢ,
a₁₁ to a₃₃:
represent elements of a matrix of said matrix calculation,
B_{R}, B_{G} and B_{B}:
represent the virtual measured densities corresponding to the filter setting positions for a properly finished normal control negative film, and
6_{R}, 6_{G} and δ_{B}:
represent constant correction elements of a matrix of said matrix calculations.

2. An exposure control method for a photographic printer according to claim 1, wherein said matrix calculation is previously executed to obtain table data representative of a relationship between said measured light amounts or measured densities and said filter setting positions, said table data are stored in a look-up table memory, and said filter setting positions are directly searched from said look-up table by using as a key said measured light amounts or measured densities.

3. An exposure control method for a photographic printer according to claim 1, wherein said matrix elements a₁₁ to a₃₃ take a value of 1 to 1.5 for a colour for which said filter setting position is obtained, and a value of ± 1 x 10-⁴ to ± 2 x 10⁻¹ for the two colours other than said colour, and said correction elements 6_{R}, δ_{G} and 6_{B} take a value of 0 to ± 2 x 10⁻¹.

4. An exposure control method for a photographic printer according to claim 1, wherein said measured light amount of each of the three primary colours is detected with a colour image area sensor, wherein the three colours are detected in a plurality of selected pixel areas within the sensor area.

5. An exposure control method for a photographic printer according to claim 1, wherein said measured light amounts of the three primary colours are measured with red, green and blue light receiving devices, respectively.

6. An exposure control method for a photographic printer according to claim 5, wherein said measured light amount for the colour obtained by each of said light receiving devices is subjected to a further matrix calculation to cancel the sensitivity crosstalk of said light receiving devices.

7. An exposure control method for a photographic printer according to claim 5, wherein said measured light amounts of said three primary colours are obtained by using said red, green and blue light receiving devices, subjected to the following further matrix calculation to cancel the sensitivity crosstalk of said light receiving devices, and the corrected amounts of said measured light amounts are logarithmically converted to obtain said measured density: 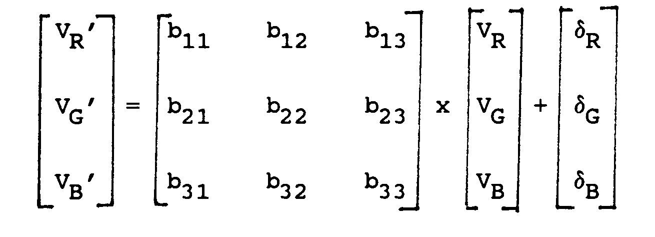 where the symbols in said further matrix calculation have meanings such that:
V_{R}, V_{G} and V_{B}:
represent the measured light amounts of said three primary colours,
V_{R}', V_{G}' and V_{B}':
represent the measured light values after said further matrix calculation,
b₁₁ to b₃₃, 8_{R}, δ_{G} and δ_{B}:
represent elements of a matrix in said further matrix calculation.

8. An exposure control method for a photographic printer according to claim 7, wherein said coefficients b₁ to b₃₃ of the matrix take a value 1 for one of the primary colours to be calculated, and a value of ± 1 x 10-⁴ to ± 2 x 10⁻¹ for the two primary colours other than said primary colour, and the correction constants 6_{R}, δ_{G} and 6_{B} take a value of 0 to ± 2 x 10-¹.

9. An exposure control method for a photographic printer according to claim 8, wherein said two types of matrix calculations are previously executed to obtain table data representative of a relationship between said measured light amounts and said filter setting positions, the table data are stored in a look-up table memory, and said filter setting positions are directly searched from said look-up table by using as a key said measured light amounts.

## Patentansprüche

1. Ein Belichtungssteuerverfahren für ein fotografisches Kopiergerät, das Korrekturfilter der Farben Gelb, Magenta und Cyan zwischen einer Lichtquelle und einem Negativfilm aufweist, mit den folgenden Schritten: Steuern der Einfügung eines jeden Farbkorrekturfilters in den optischen Kopierpfad des Kopiergeräts, um gleichzeitig die drei Farbkomponenten eines Kopierlichts anzupassen, mit dem ein Einzelbild des Negativfilms auf ein Farbpapier kopiert wird;
Messen der Intensität des durch das zu kopierende Einzelbild transmittierten Lichts, um einen Lichtmeßwert für jede der drei Hauptfarben zu erhalten;
logarithmisches Umwandeln des Lichtmeßwerts, um eine gemessene Dichte für jede der drei Hauptfarben zu erhalten;
Verarbeiten der gemessenen Dichten mit einem Matrizenberechnungsverfahren, um die Stellpositionen der Farbkorrekturfilter zu erhalten durch Berücksichtigung sämtlicher drei Werte der gemessenen Dichten der drei Hauptfarben,
dadurch gekennzeichnet,
daß das Matrizenberechnungsverfahren unter Verwendung der folgenden Gleichung ausgeführt wird: 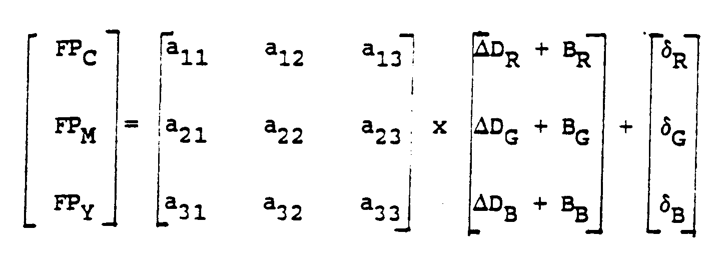 wobei die Symbole in der Gleichung die folgenden Bedeutungen haben:
FP_{c}, FP_{M} und FPy:
stellen die Filterstellpositionen dar (wobei C für Cyan, M für Magenta und Y für Gelb steht),
ΔD_{R}, ΔD_{G} und ΔD_{B}:
stellen jeweils eine virtuelle gemessene Dichtedifferenz dar, die eine Subtraktion einer virtuellen Dichte D_{;}, die durch Umwandeln einer Dichtedifferenz DN_{;} + Δdᵢ in den linearen Bereich erhalten wird, von einer virtuellen normalen Dichte DNᵢ ist, die durch das Umwandeln einer gemessenen normalen Dichte DNᵢ in den linearen Bereich erhalten wird, wobei die gemessene normale Dichte für einen normalen Vergleichsnegativfilm durch DNᵢ dargestellt wird, wobei i für eine der Farben Rot, Grün und Blau steht, wobei die gemessene Dichte des zu kopierenden Einzelbilds durch Dᵢ dargestellt wird, und wobei die Dichtedifferenz DNᵢ - Dᵢ durch Δdᵢ dargestellt wird,
a₁₁ bis a₃₃:
stellen die Elemente einer Matrix des Matrizenberechnungsverfahrens dar,
B_{R}, B_{G} und B_{B}:
stellen die virtuellen gemessenen Dichten dar, die den Filterstellpositionen für einen gut ausgeführten normalen Vergleichsnegativfilm entsprechen, und
δ_{R}, 5_{G} und δ_{B}:
stellen konstante Korrekturelemente einer Matrix des Matrizenberechnungsverfahrens dar.

2. Ein Belichtungssteuerverfahren für ein fotografisches Kopiergerät nach Anspruch 1, wobei das Matrizenberechnungsverfahren vorweg ausgeführt wird, um Tabellenwerte zu erhalten, die für ein Verhältnis zwischen den gemessenen Lichtmengen oder den gemessenen Dichten und den Filterstellpositionen repräsentativ sind, wobei die Tabellenwerte in einem Nachschlagetabellenspeicher gespeichert werden, und die Filterstellpositionen direkt aus der Nachschlagetabelle herausgesucht werden unter Verwendung der gemessenen Lichtmengen oder gemessenen Dichten als Schlüssel.

3. Ein Belichtungssteuerverfahren für ein fotografisches Kopiergerät nach Anspruch 1, wobei die Matrizenelemente a₁₁ bis a₃₃ einen Wert von 1 bis 1,5 für eine Farbe annehmen, für die die Filterstellposition erhalten wird, und einen Wert von ± 1 x 10-⁴ bis ± 2 x 10⁻¹ annehmen für die beiden anderen Farben, und wobei die Korrekturelemente δ_{R}, 5_{G} und δ_{B} einen Wert von 0 bis ± 2 x 10⁻¹ annehmen.

4. Ein Belichtungssteuerverfahren für ein fotografisches Kopiergerät nach Anspruch 1, wobei die gemessene Lichtmenge für jede der drei Hauptfarben mit einem Farbbildflächensensor festgestellt wird, wobei die drei Farben in einer Vielzahl von ausgewählten Bildpunktgebieten innerhalb der Sensorfläche nachgewiesen werden.

5. Ein Belichtungssteuerverfabren für ein fotografisches Kopiergerät nach Anspruch 1, wobei die gemessenen Lichtmengen der drei Hauptfarben jeweils mit rotes, grünes und blaues Licht empfangenden Vorrichtungen gemessen werden.

6. Ein Belichtungssteuerverfahren für ein fotografisches Kopiergerät nach Anspruch 5, wobei die gemessene Lichtmenge für die durch jede der Licht empfangenden Vorrichtungen erhaltene Farbe einem weiteren Matrizenberechnungsverfanren unterworfen wird, um das Empfindlichkeitsübersprechen der Licht empfangenden Vorrichtungen zu annullieren.

7. Ein Belichtungssteuerverfahren für ein fotografisches Kopiergerät nach Anspruch 5, wobei die gemessenen Lichtmengen der drei Hauptfarben durch Verwendung der rotes, grünes und blaues Licht empfangenden Vorrichtungen erhalten werden, dem folgenden weiteren Matrizenberechnungsverfahren unterworfen werden, um das Empfindlichkeitsübersprechen der Licht empfangenden Vorrichtungen zu annullieren, und die korrigierten Mengen der gemessenen Lichtmengen logarithmisch umgewandelt werden, um die gemessene Dichte zu erhalten: 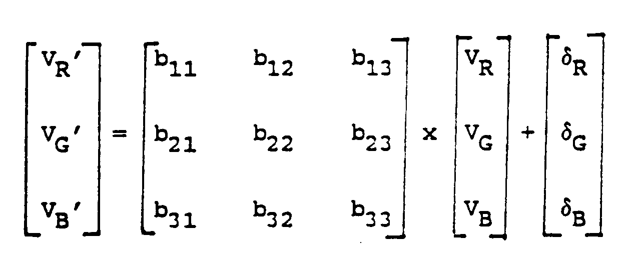 wobei die Symbole in dem weiteren Matrizenberechnungsverfahren die folgenden Bedeutungen haben:
V_{R}, V_{G} und V_{B}:
stellen die gemessenen Lichtmengen der drei Hauptfarben dar,
V_{R}', V_{G}' und V_{B}':
stellen die gemessenen Lichtmengen nach dem weiteren Matrizenberechnungsverfahren dar,
b₁ bis b₃₃, 6_{R}, o_{G} und δ_{B}:
stellen Elemente einer Matrix in dem weiteren Matrizenberechnungsverfahren dar.

8. Ein Belichtungssteuerverfahren für ein fotografisches Kopiergerät nach Anspruch 7, wobei die Koeffizienten b₁₁ bis b₃₃ der Matrix einen Wert von 1 für eine der zu berechnenden Hauptfarben annehmen und einen Wert von ± 1 x 10-⁴ bis ± 2 x 10⁻¹ für die beiden anderen Hauptfarben, und wobei die Korrekturkonstanten 6_{R}, 5_{G} und δ_{B} einen Wert von 0 bis ± 2 x 10⁻¹ annehmen.

9. Ein Belichtungssteuerverfahren für ein fotografisches Kopiergerät nach Anspruch 8, wobei die beiden Arten von Matrizenberechnungsverfahren vorweg ausgeführt werden, um Tabellenwerte zu erhalten, die für eine Beziehung zwischen den gemessenen Lichtmengen und den Filterstellpositionen repräsentativ sind, wobei die Tabellenwerte in einem Nachschlagetabellenspeicher gespeichert werden, und wobei die Filterstellpositionen direkt aus den Nachschlagetabellen ausgesucht werden durch Verwendung der gemessenen Lichtmengen als Schlüssel.

## Revendications

1. Procédé de commande d'exposition pour une imprimante photographique qui possède des filtres de correction de couleur jaune, magenta et cyan entre une source lumineuse et une pellicule négative, comportant les étapes consistant à commander l'insertion de chaque filtre de correction de couleur dans le trajet optique d'impression de ladite imprimante pour régler simultanément les trois composantes de couleur d'une lumière d'impression avec laquelle une trame d'image de la pellicule négative est imprimée sur un papier couleur ;
mesurer l'intensité de la lumière transmise à travers ladite trame d'image à imprimer pour obtenir une quantité de lumière mesurée de chacune des trois couleurs primaires ;
convertir logarithmiquement ladite quantité de lumière mesurée pour obtenir une densité mesurée de chacune des trois couleurs primaires ;
soumettre lesdites densités mesurées à un calcul matriciel pour obtenir les positions de réglage desdits filtres de correction de couleur, en considérant les trois valeurs des densités mesurées desdites trois couleurs primaires ,
caractérisé en ce que
ledit calcul matriciel est exécuté en utilisant l'équation suivante : 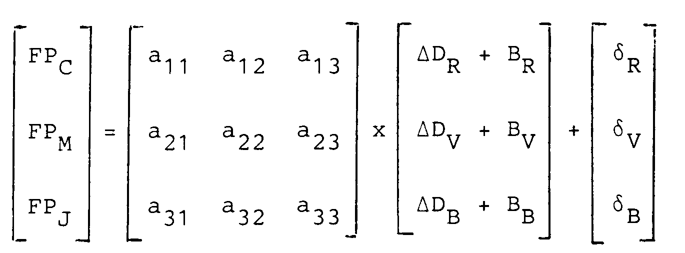 les symboles dans ladite équation ayant les significations suivantes :
FP_{c}, FP_{M} et FPⱼ :
représentent lesdites positions de réglage de filtre (C pour le cyan, M pour le magenta et J pour le jaune),
ΔD_{R}, ΔD_{V} et ΔD_{B} :
représentent chacun une différence de densité mesurée virtuelle qui est une soustraction d'une densité virtuelle Dᵢ, obtenue par conversion d'une différence de densité DN_{;} + Δdᵢ dans la région linéaire, d'une densité normale virtuelle DNᵢ, obtenue par conversion d'une densité normale mesurée DN_{;} dans la région linéaire, où la densité normale mesurée pour une pellicule négative de commande normale représentée par DN_{;}, i représentant l'une des couleurs rouge, verte et bleue, la densité mesurée de ladite trame d'image à imprimer est représentée par D_{;},et la différence de densité DNᵢ - D_{;} est représentée par Δdᵢ,
a₁₁ à a₃₃ :
représentent les éléments d'une matrice dudit calcul matriciel,
_{BR}, Bᵥ et B_{B} ^{:}
représentent les densités mesurées virtuelles correspondant aux positions de réglage de filtre pour une pellicule négative de commande normale correctement achevée, et
δ_{R}, δ_{V} et δ_{B} :
représentent des éléments de correction constants d'une matrice desdits calculs matriciels.

2. Procédé de commande d'exposition pour une imprimante photographique selon la revendication 1, dans lequel ledit calcul matriciel est préalablement effectué pour obtenir des données de table représentatives d'une relation entre lesdites quantités de lumière mesurées ou des densités mesurées et lesdites positions de réglage de filtre, lesdites données de table sont mémorisées dans une mémoire de table de consultation, et lesdites positions de réglage de filtre sont directement extraites de ladite table de consultation en utilisant en tant que clé lesdites quantités de lumière mesurées ou les densités mesurées.

3. Procédé de commande d'exposition pour une imprimante photographique selon la revendication 1, dans lequel lesdits éléments de matrice a₁₁ à a₃₃ prennent une valeur à 1 à 1,5 pour une couleur pour laquelle ladite position de réglage de filtre est obtenue, et une valeur de ± 1 x 10-⁴ à ± 2 x 10⁻¹ pour les deux couleurs autres que ladite couleur, et lesdits éléments de correction δ_{R},δ_{V} et δ_{B} prennent une valeur de 0 à ± 2 x 10⁻¹.

4. Procédé de commande d'exposition pour une imprimante photographique selon la revendication 1, dans lequel ladite quantité de lumière mesurée de chacune des trois couleurs primaires est détectée à l'aide d'un capteur de zone d'image couleur, dans lequel les trois couleurs sont détectées dans une pluralité de zones d'élément d'image sélectionnées à l'intérieur de la région de capteur.

5. Procédé de commande d'exposition pour une imprimante photographique selon la revendication 1, dans lequel lesdites quantités de lumière mesurées des trois couleurs primaires sont mesurées à l'aide de dispositifs récepteurs de lumière rouge, verte et bleue, respectivement.

6. Procédé de commande d'exposition pour une imprimante photographique selon la revendication 5, dans lequel ladite quantité de lumière mesurée pour la couleur obtenue par chacun desdits dispositifs récepteurs de lumière est soumise à un autre calcul matriciel pour annuler l'interférence de sensibilité desdits dispositifs récepteurs de lumière.

7. Procédé de commande d'exposition pour une imprimante photographique selon la revendication 5, dans lequel lesdites quantités de lumière mesurées desdites trois couleurs primaires sont obtenues en utilisant lesdits dispositifs récepteurs de lumière rouge, verte et bleue, soumises à l'autre calcul matriciel suivant pour annuler l'interférence de sensibilité desdits dispositifs récepteurs de lumière, et les quantités corrigées desdites quantités de lumière mesurées sont converties logarithmiquement pour obtenir ladite densité mesurée : 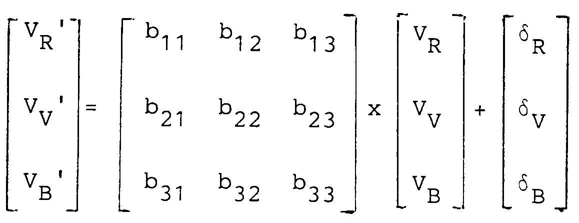 dans laquelle les symboles dudit autre calcul matriciel ont les significations suivantes :
_{VR}, Vᵥ et V_{B} :
représentent les quantités de lumière mesurées desdites trois couleurs primaires,
V_{R}', V_{v'} et V_{B}' :
représentent les valeurs de lumière mesurées après ledit autre calcul matriciel,
bᵢ à à b₃₃, δ_{R}, δᵥ et δ_{B} :
représentent les éléments d'une matrice dans ledit autre calcul matriciel.

8. Procédé de commande d'exposition pour une imprimante photographique selon la revendication 7, dans lequel lesdits coefficients b₁₁ à b₃₃ de la matrice prennent une valeur 1 pour l'une des couleurs primaires à calculer et une valeur de ± 1 x 10-⁴ à ± 2 x 10-¹ pour les deux couleurs primaires autres que ladite couleur primaire, et les constantes de correction δ_{R}, δᵥ et δ_{B} prennent une valeur de 0 à ± 2 x 10-₁.

9. Procédé de commande d'exposition pour une imprimante photographique selon la revendication 8, dans lequel lesdits deux types de calculs matriciels sont préalablement effectués pour obtenir des données de table représentatives d'une relation entre lesdits quantités de lumière mesurées et lesdites positions de réglage de filtre, les données de table sont mémorisées dans une mémoire de table de consultation, et lesdites positions de réglage de filtre sont directement extraites de ladite table de consultation en utilisant comme clé lesdites quantités de lumière mesurées.
